# EUROPEAN PATENT APPLICATION

(11) **EP 4 772 590 A1**
(43) Date of publication of application: **08.07.2026**
(21) Application number: 23950280.0
(22) Date of filing: 01.09.2023
(51) Int. Cl.: C09J 7/30, C09J 7/25, C09J 133/00, C09J 11/08, C09J 175/04

(54) **BIODEGRADABLE ADHESIVE TAPE, BIODEGRADABLE ADHESIVE COMPOSITION, AND PRODUCTION METHOD FOR BIODEGRADABLE ADHESIVE TAPE**

(71) Applicant: 3M Innovative Properties Company, Saint Paul, Minnesota 55133-3427 (US)
(72) Inventor: LI, Jing, Shanghai 200233 (CN); LI, Yu, Shanghai 200233 (CN); LIU, Junkang, Saint Paul, Minnesota 55133-3427 (US); LEE, Chiling, Taipei City (TW); REN, Pu, Shanghai 200233 (CN); TAO, Ran, Shanghai 200233 (CN); CHE, Yu, Shanghai 200233 (CN)
(74) Representative: Vossius & Partner Patentanwälte Rechtsanwälte mbB
(86) International application number: PCT/CN2023/116482
(87) International publication number: WO 2025/043705

(57) **Abstract**

The present invention provides a biodegradable adhesive tape, a biodegradable adhesive composition, and a method for manufacturing the biodegradable adhesive tape. Specifically, the biodegradable adhesive tape comprises: a biodegradable adhesive composition comprising: an acrylic adhesive and a polyurethane dispersant, the polyurethane dispersant having a dry weight of at least 8% or more relative to a wet weight of the biodegradable adhesive composition, and the polyurethane dispersant having a dry weight of not more than 40% relative to a dry weight of the acrylic adhesive; and a biodegradable backing film; wherein the biodegradable adhesive tape has a composting degradation rate of at least greater than or equal to 90% at 180 days, as measured according to GB/T 19277.1. The present application provides an adhesive tape and an adhesive composition having easily available raw materials and simple preparation, and having both good adhesive performance and biodegradability.

## Description

### TECHNICAL FIELD

The present invention relates to an adhesive tape, an adhesive composition applied to the adhesive tape, and a method for manufacturing the adhesive tape, and relates in particular to a biodegradable adhesive tape, an adhesive composition applied to the biodegradable adhesive tape, and a method for manufacturing the biodegradable adhesive tape.

### BACKGROUND ART

As people's environmental awareness has increased, recycling and reuse of materials and various resources has gradually attracted people's attention. The decomposability of resources or materials has developed into an important research field. The decomposition of materials reduces the impact of said materials on the environment, and even converts them into resources that can be reused. Biodegradability is one of the important fields.

Adhesives or adhesive tapes are common items in everyday life. For example, goods need to be properly packaged during transportation, and in order to ensure that packaging can be tightly closed to protect the goods, the use of adhesives or adhesive tapes is often needed. However, most adhesives or adhesive tapes cannot be recycled. At present, there are adhesive tapes manufactured using degradable backing films, but the adhesive itself is not degradable, and even if there is a biodegradable adhesive tape, it is difficult to balance the degradation rate or adhesive tape performance. In other words, biodegradable adhesive tapes are still limited.

CN106574036A discloses a biodegradable pressure-sensitive adhesive, which is achieved by chemical cross-linking of polyurethane prepolymers, and by formulating a pressure-sensitive adhesive having one or more polyurethanes of this kind as a main component.

CN107523253A provides a biodegradable pressure-sensitive adhesive, but the pressure-sensitive adhesive thereof is provided as a dispersion in at least one solvent to prepare an adhesive tape. It is generally known that the use of solvents is usually not environmentally friendly.

CN106459694A mainly relates to a biodegradable adhesive tape for protecting surfaces, containing at least 60 wt% of at least one polyurethane, which can be detached easily and largely without residue from a surface to be protected, the adhesive having sufficient cohesion.

CN109957372A provides a polyester hot melt pressure-sensitive adhesive, but the preparation of hot melt adhesives generally requires special equipment.

There are other techniques for manufacturing pressure-sensitive adhesives from naturally occurring raw materials, such as those in CN106978116A.

### SUMMARY

In view of the prior art, the biodegradable adhesive tape or adhesive may need to be manufactured by means of different adhesive systems, such as a solvent system, a hot-melt adhesive system, etc., or using natural raw materials, but the manufacturing process thereof is relatively complex. Acrylic adhesives are an adhesive system commonly used in pressure-sensitive adhesives, which does not generally achieve a biodegradability effect. However, the present invention provides a biodegradable adhesive and adhesive tape, and a manufacturing method therefor, in which an aqueous acrylic adhesive is used as a main component, and a polyurethane dispersant is added. In addition to good adhesive tape performance, they have been unexpectedly found to have good biodegradation rates. That is, the present application provides an adhesive tape and an adhesive composition having easily available raw materials and simple preparation, and having both good adhesive performance and biodegradability.

To achieve the described process effect, a technical solution of the present invention is as follows: a biodegradable adhesive tape, the adhesive tape comprising: a biodegradable adhesive composition and a biodegradable backing film, wherein the biodegradable adhesive composition comprises an acrylic adhesive and a polyurethane dispersant, the polyurethane dispersant having a dry weight of at least 8% or more relative to a wet weight of the biodegradable adhesive composition, and the polyurethane dispersant having a dry weight of not more than 40% relative to a dry weight of the acrylic adhesive; the biodegradable adhesive tape has a composting degradation rate of at least greater than or equal to 90% at 180 days, as measured according to GB/T 19277.1.

In some embodiments, the biodegradable backing film may be a multilayer backing selected from one or a combination of polylactic acid film, kraft paper and cellophane.

In some embodiments, the biodegradable backing film may be a biaxially oriented biodegradable backing film.

In some embodiments, the acrylic adhesive comprises an aqueous random copolymer having monomer units selected from one or more of acrylate, methacrylate, acrylic acid, methacrylic acid, acrylamide and methacrylamide.

In some embodiments, the polyurethane dispersant is an aqueous dispersant, such as an anionically modified polyurethane dispersant.

In some embodiments, the biodegradable adhesive tape further comprises a tackifier, wherein the tackifier can be selected from one or more of a rosin resin, a hydrogenated rosin resin, and a terpene phenolic resin.

In some embodiments, the biodegradable adhesive tape has a static shear adhesion (room temperature shear force) of at least greater than 24 hours as measured according to GBT4851-2014 A; a 180° peel adhesion of at least 2.5 N/cm or more as measured according to GBT 2792-2014; and an initial tack of at least greater than or equal to ball No. 12 as measured according to GB/T 4582-2002.

In some embodiments, the biodegradable adhesive composition after drying has a thickness between 10 µm and 200 µm.

In some embodiments, the biodegradable adhesive tape further comprises a release layer.

The present application further provides a biodegradable adhesive composition, comprising: an acrylic adhesive and a polyurethane dispersant, wherein the polyurethane dispersant has a dry weight of at least 8% or more relative to a wet weight of the biodegradable adhesive composition, and the polyurethane dispersant has a dry weight of not more than 40% relative to a dry weight of the acrylic adhesive, and wherein the biodegradable adhesive composition has a composting degradation rate of at least equal to or greater than 90% at 180 days, as measured according to GB/T 19277.1.

The present application further relates to a method for manufacturing a biodegradable adhesive tape, comprising: providing a biodegradable backing film and a biodegradable adhesive composition; coating the biodegradable adhesive composition on the biodegradable backing film, wherein the biodegradable adhesive composition comprises an acrylic adhesive and a polyurethane dispersant, the polyurethane dispersant having a dry weight of at least 8% or more relative to a wet weight of the biodegradable adhesive composition, and the polyurethane dispersant having a dry weight of not more than 40% relative to a dry weight of the acrylic adhesive; and drying and dehydrating the biodegradable backing film coated with the biodegradable adhesive composition, to obtain a biodegradable adhesive tape, wherein the biodegradable adhesive tape has a composting degradation rate of at least greater than or equal to 90% at 180 days, as measured according to GB/T 19277.1.

### BRIEF DESCRIPTION OF THE DRAWINGS

FIG. 1 is a schematic structural view of a biodegradable adhesive tape according to an embodiment of the present invention;
FIG. 2 is a schematic structural view of a biodegradable adhesive tape according to another embodiment of the present invention;
FIG. 3 is a flowchart of manufacturing a biodegradable adhesive tape according to an embodiment of the present invention; and
FIG. 4 is a flowchart of manufacturing a biodegradable adhesive tape according to another embodiment of the present invention.

### DETAILED DESCRIPTION

Some specific embodiments according to the present invention will be described below in more detail, with reference to the accompanying drawings. It should be understood that, without departing from the scope and spirit of the present invention, a person skilled in the art would be able to envisage other various embodiments based on the teachings provided herein, and modify the same. Therefore, the embodiments set forth below are for illustration rather than limitation.

Unless otherwise indicated, all numbers used in this description and the claims for presenting the size, amounts and physical properties of the features should be understood as being modified by the term "approximately". Accordingly, unless indicated to the contrary, the numerical values set forth in this description and the claims are approximate values, and based on the teachings of the present invention, a person skilled in the art would be able to change such approximate values appropriately, so as to obtain desired properties. A numerical range represented by endpoints should include all numbers in the range. For example, the range of 1 to 5 includes 1, 1.1, 1.3, 1.5, 2, 2.75, 3, 3.80, 4, 5, etc. In addition, "biodegradable" as described in the present application refers to a material having an ultimate aerobic biodegradability and a degree of disintegration of more than 90% in a predetermined test period according to the test method specified in the Chinese National Standard GB/T 19277.1-2011.

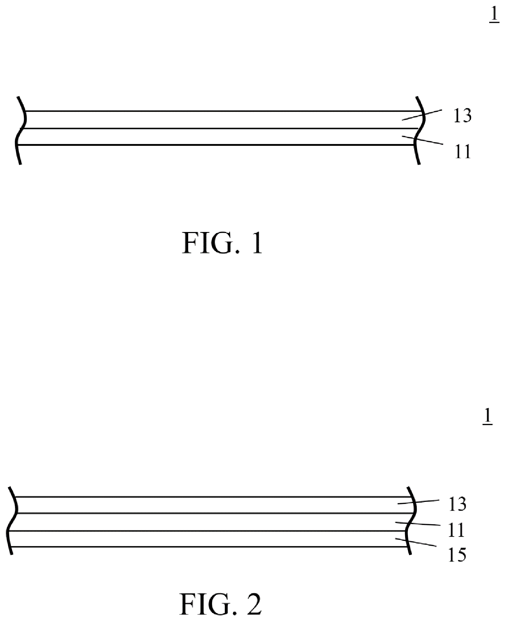

Referring to FIG. 1, said figure is a schematic structural view of a biodegradable adhesive tape according to an embodiment of the present invention. As shown in FIG. 1, a biodegradable adhesive tape 1 may include a biodegradable backing film 11 and a biodegradable adhesive composition 13, wherein the biodegradable backing film 11 may be a film made of any biodegradable material, for example, polylactic acid (PLA) film, cellophane, kraft paper, or the like, but is not limited thereto. In addition, the biodegradable backing film may be a multilayer backing film of one or a combination of biodegradable materials. In some embodiments, to improve the properties such as mechanical properties of the backing film 11, the biodegradable backing film 11 may be structurally modified. For example, when a polylactic acid film is used, a biaxially oriented polylactic acid film (BOPLA) may be obtained by biaxially stretching the film. In some embodiments, a surface treatment may also be used (e.g., a corona treatment may be used) to enhance the adhesion of the biodegradable adhesive composition 13 to the biodegradable backing film 11.

Referring again to FIG. 1, the biodegradable adhesive tape 1 further includes a biodegradable adhesive composition 13 coated on the biodegradable backing film 11. In the present invention, the biodegradable adhesive composition 13 includes an acrylic adhesive and a polyurethane dispersant, the acrylic adhesive and the polyurethane dispersant having an appropriate proportion relative to each other, and the polyurethane dispersant having an appropriate proportion relative to the biodegradable adhesive composition, wherein the polyurethane dispersant has a dry weight of at least 8% or more, such as 8.0%, 8.1%, 8.5%, 10.0%, 12.5%, or any proportion within this interval, relative to the total wet weight of the biodegradable adhesive composition, but the proportion of polyurethane cannot be too high. In the present application, the polyurethane dispersant preferably has a dry weight of not more than 40.0%, for example, not more than 40.0%, not more than 30.0%, or not more than 20.0%, such as 39.2%, 29.4%, 19.2% or any proportion within this interval, relative to the dry weight of the acrylic adhesive. The adhesive of the present invention is an acrylic system, and the acrylic adhesive used is an aqueous acrylic adhesive, comprising an aqueous random copolymer, monomer units of which may be one or more selected from acrylate, methacrylate, acrylic acid, methacrylic acid, acrylamide and methacrylamide. The polyurethane dispersant may also be an aqueous dispersant, wherein an anionically modified aqueous polyurethane dispersant is preferable, but the present application is not limited thereto.

In some embodiments, the biodegradable adhesive composition 13 in the biodegradable adhesive tape 1 may further include a tackifier, and the tackifier may be selected from one or more of a rosin rosin, a hydrogenated rosin resin, and a terpene phenolic resin, wherein an emulsion-type tackifier is preferable, but the present application is not limited thereto. In some embodiments of the present invention, an additive such as a tackifier is selectively added, and is not necessary, and if added, it is preferable that the additive does not exceed 12% of the total wet weight of the adhesive composition. In addition, without affecting the adhesive properties and biodegradability of the biodegradable adhesive tape 1, the biodegradable adhesive composition 13 may further selectively include other additives, such as colorants and other auxiliary agents.

In the present invention, the biodegradable adhesive tape 1 has a static shear adhesion (room temperature shear force) of at least more than 24 hours as measured according to National Standard GBT4851-2014 A of the People's Republic of China, and in some embodiments, the static shear adhesion may be more than 30 hours, 90 hours, or even 160 hours. The biodegradable adhesive tape 1 has a 180° peel adhesion of at least greater than or equal to 2.5 N/cm as measured according to National Standard GBT 2792-2014 of the People's Republic of China, and in some embodiments, the 180° peel adhesion of the biodegradable adhesive tape is greater than 3 N/cm, or even close to 8 N/cm. The biodegradable adhesive tape 1 has an initial tack of at least greater than or equal to ball No. 12 as measured according to National Standard GB/T 4582-2002 of the People's Republic of China, and in some embodiments, the initial tack of the biodegradable adhesive tape may reach ball No. 14, ball No. 16, or even ball No. 17. Further, the biodegradable adhesive tape 1 has a composting degradation rate of at least greater than or equal to 90% at 180 days as measured according to National Standard GB/T 19277.1 of the People's Republic of China. It can thus be seen that the biodegradable adhesive tape 1 provided by the present invention has good adhesion, can be firmly attached to the surface of an adherend, and has good initial tack. The tape not only provides good adhesive ability, but also has excellent biodegradability, so that the tape has both good adhesive performance and good biodegradable performance. Therefore, the biodegradable adhesive tape of the present invention can be applied to various scenarios requiring packaging, box sealing, adhesion, and covering. For example, the biodegradable adhesive tape may be used as a box sealing tape, but it is not limited thereto.

Referring to FIG. 2, said figure is a schematic structural view of a biodegradable adhesive tape according to another embodiment of the present invention. As shown in FIG. 2, in the biodegradable adhesive tape 1, in addition to the biodegradable adhesive composition 13 coated on the biodegradable backing film 11, a release layer 15 may be selectively added, the release layer 15 being disposed on the opposite side of the biodegradable backing film 11 relative to the biodegradable adhesive composition 13; that is, the biodegradable adhesive composition 13 and the release layer 15 may be disposed on two opposite sides of the biodegradable backing film 11. The release layer 15 may be selected without any limitation. For example, a long-chain alkyl or silicone type release agent commonly used in adhesive tapes may be selected as the release layer, so that the rolled biodegradable adhesive tape is easily unwound at the time of use for easy access. In addition, it should be understood that in some embodiments, a release paper may be selected to facilitate unwinding, but when used, the release paper is attached to the biodegradable adhesive composition.

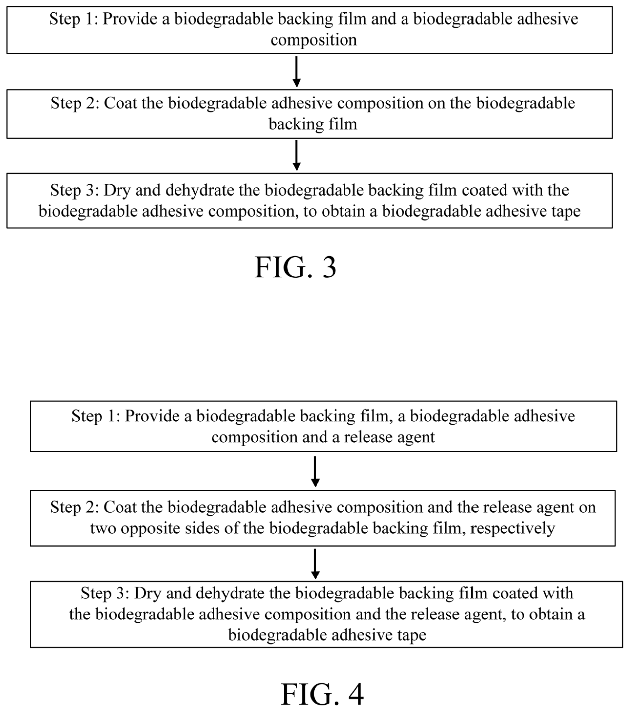

The biodegradable adhesive tape 1 of the present invention also has the advantage of a simple manufacturing process. As shown in FIG. 3, the manufacturing method therefor includes the following steps: step 1, providing a biodegradable backing film 11 and a biodegradable adhesive composition 13; step 2, coating the biodegradable adhesive composition 13 on the biodegradable backing film; and step 3, drying and dehydrating the biodegradable backing film coated with the biodegradable adhesive composition, to obtain the biodegradable adhesive tape of the present invention. Since the acrylic adhesive is an adhesive commonly used for pressure-sensitive adhesives, there is an advantage of easy access to raw materials compared with the prior art. Moreover, the method used to coat the adhesive in the present invention is not limited, and any method for coating an adhesive on a backing film may be applied in the present application, such as a knife coating method, a roll coating method, a blade coating method, a bar coating method, a spin coating method, a spray coating method, a die coating method, a gravure coating method and the like. The thickness of the applied adhesive is preferably that applied when manufacturing a general tape, so that the thickness of the biodegradable adhesive composition after final drying is about 10 µm to 200 µm, preferably 10 µm to 100 µm, and more preferably 20 µm to 25 µm. In addition, the biodegradable adhesive composition used in the present invention may be entirely composed of an aqueous system, and the method of drying the adhesive composition is not limited (for example, an oven may be used to heat the adhesive composition, but the method is not limited thereto). Therefore, it has the characteristics of simple processing and environmental friendliness. Furthermore, compared with aqueous acrylic adhesives known in the prior art, the present application provides further improved biodegradable performance, so that the acrylic adhesive can be used in the scope of biodegradable adhesive tapes. If the biodegradable adhesive composition having good adhesive properties of the present invention is directly dried, a biodegradable adhesive can be obtained. FIG. 4 is a flowchart of manufacturing a biodegradable adhesive tape according to another embodiment of the present invention. Compared with FIG. 3, a step of providing a release layer and coating a release agent to form a release layer is added in the present embodiment, wherein the release layer and the biodegradable adhesive composition are coated on two opposite sides of the biodegradable backing film, respectively. In some embodiments, the release agent and the biodegradable adhesive composition may be simultaneously coated on two opposite sides of the biodegradable backing film in the same step. However, it should be understood that in other embodiments, the release agent and the biodegradable adhesive composition may also be applied on the biodegradable backing film one after the other (the order of the two not being limited), to prepare a biodegradable adhesive tape having a release layer.

The following specific embodiments are intended to describe the present invention exemplarily instead of restrictively.

Table 1 shows raw materials and sources used in the present invention.

**Table 1 List of raw materials**

| Product Name | Product Details | Supplier |
|---|---|---|
| Polyurethane dispersant | 50% solids, aqueous, anionically modified | Covestro Polymers (China) Co., Ltd. |
| Acrylic adhesive A | 65% solids, aqueous | BASF (China) |
| Acrylic adhesive B | 42.5% solids, aqueous | 3M China |
| Rosin resin A | 55% solids | Synthomer |
| Rosin resin B | 62% solids | M.land Chemical |
| Biaxially oriented polylactic acid film (BOPLA) | Thickness of 28 µm | Xiamen Changsu Industry Co., Ltd. |
| Kraft paper | Thickness of 84 µm | Shandong Qifeng New Materials Co., Ltd. |
| Cellophane | Thickness of 28 µm | Shandong Henglian New Materials Co., Ltd. |

The raw materials described in Table 1 were used to prepare each set of adhesive compositions according to the proportions in Table 2 below.

Each set of raw materials in Table 2 was uniformly mixed with a Thinky Mixer, and 20 g thereof was coated on biaxially oriented polylactic acid film (BOPLA) having a thickness of 400 mm*800 mm using a lab coater. The adhesive composition was dehydrated by drying at 100°C for 5 minutes to prepare each set of tape samples.

**Table 2 Proportions of components of each set of adhesive compositions**

| Adhesive composition formula | Polyurethane dispersant (g) | Acrylic adhesive (g) | | Rosin resin (g) | | Polyurethane dispersant/adhesive composition (dry weight/wet weight, %) | Polyurethane dispersant/acrylic adhesive (dry weight/dry weight, %) |
|---|---|---|---|---|---|---|---|
| | | A | B | A | B | | |
| Comparative Example 1 | 0 | 20 | 0 | 0 | 0 | 0% | 0% |
| Comparative Example 2 | 20 | 0 | 0 | 0 | 0 | 100% | NA |
| Comparative Example 3 | 0 | 15 | 0 | 1.5 | | 0% | 0% |
| Comparative Example 4 | 1 | 15 | 0 | 1.5 | 0 | 2.85% | 5.1% |
| Comparative Example 5 | 10 | 18 | 0 | 0 | 2.2 | 16.6% | 42.7% |
| Example 1 | 5 | 0 | 20 | 0 | 0 | 10% | 29.4% |
| Example 2 | 2.5 | 10 | 0 | 0 | 0 | 10% | 19.2% |
| Example 3 | 2.5 | 10 | 0 | 0 | 3 | 8.1% | 19.2% |
| Example 4 | 2.5 | 10 | 0 | 0 | 2.2 | 8.5% | 19.2% |
| Example 5 | 5 | 15 | 0 | 0 | 0 | 12.5% | 39.2% |

The following are methods used by the present invention to measure various properties of adhesive tapes, and test results of the properties of each set of adhesive tape samples are shown in Table 3.

### Adhesive Thickness of Adhesive Tape Samples

The thickness of an adhesive tape was measured according to the test method for the thickness of adhesive tapes in National Standard GB/T 7125-2014 of the People's Republic of China, and the adhesive thickness of the adhesive tape was obtained by subtracting the thickness of an adhesive tape backing film from the measured thickness of the tape.

### Static Shear Adhesion (Room Temperature Shear Force)

The static shear adhesion of an adhesive tape was measured according to National Standard GBT4851-2014 A of the People's Republic of China. An adhesive tape sample having a width of 12 mm and a length of 150 mm was uniformly adhered to a stainless steel plate using a pressure roller, a free end of the tape sample was made vertical and a weight was applied to the free end, and the time required for the tape sample to separate from the stainless steel test plate was recorded.

### 180° Peel Adhesion

The peel adhesion of each set of adhesive tape samples was measured according to National Standard GBT 2792-2014 of the People's Republic of China. An adhesive tape sample having a width of 24 mm and a length of 300 mm was adhered to a stainless steel plate, and the stainless steel plate was fixed on a fixture of a tensile strength tester. Another fixture of the tester clamped a free end of the adhesive tape sample, forming an angle of 180° relative to the stainless steel plate, and pulled the adhesive tape sample apart at a specified speed to test the peel force required to separate the adhesive tape sample from the stainless steel plate.

### Initial Tack

The initial tack of a tape sample was measured according to National Standard GB/T 4582-2002 of the People's Republic of China. Rolling balls of different numbers were placed on the adhesive surface of a tape on an inclined plate, and the initial tack was evaluated on the basis of the maximum steel ball size that could be adhered to the adhesive surface of a specified length.

### Adhesion between adhesive and backing film (#2Bond)

After the static shear adhesion test and the 180° peel adhesion test, the adhesives of five sets of adhesive tape samples in Examples 1-5 were visually inspected to see whether they were detached from the backing film.

### Degradation rate

In the present invention, "Determination of ultimate aerobic biodegradability of materials under controlled composting conditions - Method by analysis of evolved carbon dioxide" in National Standard GB/T 19277.1-2011 of the People's Republic of China was adopted to measure an ultimate aerobic biodegradability and a degree of disintegration of each tape sample under simulated strong aerobic composting conditions. Each adhesive tape sample was mixed with an inoculant and introduced into a static composting container. In this container, the mixture was strongly aerobically composted at a specified temperature, oxygen concentration and humidity. The percentage of biodegradation was calculated according to the formula specified in the standard.

**Table 3 Performance of each set of adhesive tape samples**

| | Static shear adhesion (hours) | 180° Peel Adhesion (N/cm) | Initial tack (#) | Degradation rate % (180 days) | Adhesive thickness (µm) |
|---|---|---|---|---|---|
| Comparative Example 1 | 9.8 | 6.18 | NA | NA | 21.0 |
| Comparative Example 2 | NA | NA | NA | 90.5% | 25.0 |
| Comparative Example 3 | 12.2 | 8.0 | NA | NA | 21.8 |
| Comparative Example 4 | > 12 | 5.4 | NA | 71.3% | 21.8 |
| Comparative Example 5 | 47.7 | 3.27 | #2 | NA | 21.75 |
| Example 1 | > 166 | 7.93 | #14 | > 90% | 21.3 |
| Example 2 | > 166 | 7.93 | #12 | > 90% | 23.0 |
| Example 3 | 33.6 | 2.76 | #16 | > 90% | 20.0 |
| Example 4 | 90 | 2.76 | #17 | > 90% | 25.0 |
| Example 5 | 31 | 3.21 | #12 | > 90% | 25.0 |

Generally, whether the adhesive performance of an adhesive tape meets the requirements for use is mainly based on the following three indicators: static shear adhesion, peel adhesion, and initial tack. The higher the static shear adhesion of an adhesive tape, the better the persistence of the adhesive after the tape completely adheres to an object. For example, the static shear adhesion requirement of a box sealing adhesive tape is generally at least 24 hours or more. It can be seen from Examples 1 to 5 of the present invention that when the ratio of (the dry weight of) the polyurethane dispersant to the wet weight of the entire adhesive composition is increased to be approximately greater than or equal to 8%, the static shear adhesion can reach the requirement of 24 hours or more, and the static shear adhesion of the adhesive tape sample can even reach at least 30 hours or more, which shows that the persistence of the adhesion of the adhesive tape sample provided by the present application is good. In contrast, in Comparative Examples 1, 3 and 4, when the ratio of (the dry weight of) the polyurethane dispersant to the wet weight of the entire adhesive composition is less than 8%, the adhesive tape sample cannot reach the static shear adhesion requirement of 24 hours, wherein when the polyurethane dispersant is absent from the adhesive composition (Comparative Example 1), cohesion is poor and static shear adhesion performance is poor, and when the adhesive composition contains only the polyurethane dispersant but does not contain any acrylic adhesive, the adhesive tape does not exhibit an adhesive effect (Comparative Example 2). In addition, when the proportion of the polyurethane dispersant is increased, the static shear adhesion value of the adhesive tape can be improved (Comparative Example 5), but when the proportion of the polyurethane dispersant is too high relative to the acrylic adhesive (Comparative Example 5), the initial adhesive effect (i.e., the initial tack) of the adhesive tape is affected.

The initial tack of the adhesive tape represents the ability of the adhesive tape to adhere to an adherend in a short contact time, and the larger the ball number measured according to GB/T 4582 to 2002, the better the initial adhesive effect of the adhesive tape. As can be seen from Table 3, the initial tack of any of Experimental Examples 1 to 5 of the present application can reach ball No. 12 or more; that is, each set of adhesive tape samples of Examples 1 to 5 of the present application can be quickly and firmly adhered to an adherend when applied to the adherend, which is advantageous in application fields such as packaging and box sealing. In contrast, in Comparative Example 5, when the ratio of the polyurethane dispersant to the acrylic adhesive (dry weight/dry weight) exceeds 40%, the adhesive tape sample does not have good initial tack.

The 180° peel adhesion of the adhesive tape reflects the bonding strength of a material. Referring again to Table 3, it can be seen from Experimental Examples 1 to 5 of the present application that when the ratio of (the dry weight of) the polyurethane dispersant to the total wet weight of the adhesive composition is 8% or more and when the ratio of the polyurethane dispersant to the acrylic adhesive (dry weight/dry weight) is controlled to be 40% or less, the 180° peel adhesion of each set of tape samples reaches at least 2.5 N/cm or more, indicating that all of them have a certain adhesive strength. Although Comparative Example 1 has good 180° peel adhesion, the static shear adhesion performance is poor, as described above. However, in the absence of a polyurethane dispersant, adding a tackifier may slightly improve the static shear adhesion and the 180° peel adhesion (Comparative Example 3 in comparison to Comparative Example 1), but as described above, both Comparative Example 3 and Comparative Example 1 fail to satisfy the general shear property requirements for the static shear adhesion of adhesive tapes. Comparing Comparative Example 3 with Comparative Example 4, if the polyurethane dispersant is further added, the addition may contribute to the improvement of static shear adhesion, but will also affect 180° peel adhesion. It can thus be seen that the addition amount of the polyurethane dispersant and the ratio of the polyurethane dispersant to the acrylic adhesive need to be appropriate. It has been found in the present application that the adhesive tape sample has good static shear adhesion, peel adhesion and initial tack when the ratio of (the dry weight of) the polyurethane dispersant to the total wet weight of the adhesive composition is at least 8% or more, and when the ratio of the polyurethane dispersant to the acrylic adhesive (dry weight/dry weight) is controlled not to exceed 40%. In addition, according to visual observation, in Experimental Examples 1-5, the adhesive was not separated from the backing film after the static shear adhesion test and after the 180° peel adhesion test, indicating that the bonding force between the adhesive and the tape backing was also good.

In general, since acrylic adhesives have a crosslinked structure, most cannot be degraded; for instance, in Comparative Example 1, the degradation rate was only 6.77% at 62 days when the degradation rate was measured according to the method of GB/T 19277.1. While the polyurethane dispersant is generally used to improve cohesion of the adhesive, it may be physically cross-linked with the adhesive so that the adhesive is internally bound together with a stronger attraction force, to produce better static shear adhesion, and when the adhesive is internally bound together with a stronger attraction force, it does not contribute to decomposition. In other words, a substance that contributes to cohesion may adversely affect decomposition of the polymer. However, in the case of the polyurethane dispersant used in the present invention, not only does the dispersant have good biodegradability itself, it has also been unexpectedly found in the present application that the adhesive tape prepared with an acrylic adhesive to which a small amount of a degradable polyurethane dispersant is added also has a biodegradability effect (as shown in Comparative Example 4). If the amount of the polyurethane dispersant is increased, it is theoretically disadvantageous for adhesive decomposition due to an increase in cohesion. However, when the ratio of (the dry weight of) the polyurethane dispersant to the wet weight of the entire adhesive composition is increased to 8% or more while controlling the ratio of the polyurethane dispersant to the acrylic adhesive (dry weight/dry weight) to 40% or less in the present application, as shown in Table 3, the degradation performance of each of the adhesive tape samples of Examples 1 to 5 of the present application can reach 90% or more at 180 days, which not only has good cohesion, but also has excellent biodegradability. In other words, the prepared adhesive tape is a biodegradable adhesive tape and has good adhesive performance. In addition, since the tackifier generally has a low molecular weight and does not cross-link with the adhesive, the addition of the tackifier does not affect the adhesive property and the degradation rate of the adhesive tape sample when the addition amount of the polyurethane dispersant and the ratio of the polyurethane dispersant to the acrylic adhesive are in the above ranges. The adhesive composition prepared from the formulation of Example 3 was subjected to a degradation test, and the degradation rate at 127 days could reach 90.0%. Therefore, it can be understood that an adhesive composition having good adhesive performance and degradation ability can be obtained by mixing an aqueous acrylic adhesive and a polyurethane dispersant in the ratio disclosed in the present application.

Table 4 shows the adhesive performance and degradation rates of biodegradable adhesive tapes prepared by applying the adhesive composition formulation of Example 2 to different biodegradable backing films.

**Table 4 Performance of biodegradable adhesive tape prepared by applying adhesive composition formulation of Example 2 on different biodegradable backing films**

| Biodegradable backing film | Static shear adhesion (hours) | 180° peel adhesion (N/cm) | Initial tack (#) | Degradation rate % (180 days) | Adhesive thickness (µm) |
|---|---|---|---|---|---|
| Biaxially oriented polylactic acid film | > 166 | 7.93 | #12 | > 90% | 23.0 |
| Kraft paper | 102.45 | 6.97 | #12 | > 90% | 19.0 |
| Cellophane | > 169 | 4.44 | #12 | > 90% | 22.0 |

As shown in Table 4, the adhesive composition prepared with the formulation of Example 2, regardless of whether it is applied to the biaxially oriented polylactic acid film, the kraft paper, or the cellophane, can maintain good adhesive properties of adhesive tapes and have good degradation performance.

In view of the above, the present invention provides an adhesive composition which is easily prepared and biodegradable. The adhesive composition is a non-solvent adhesive composition and thus is relatively environmentally friendly, and has the advantage of easy preparation relative to hot melt adhesives or other adhesives extracted from biological components. When the adhesive composition is applied to a biodegradable backing, various biodegradable adhesive tapes can be prepared, providing good adhesive performance to satisfy the adhesive requirements of adhesive tapes, such as static shear adhesion, peel adhesion and initial tack. Hence, the adhesive composition can be used in various application fields such as packaging, box sealing, adhesion and sticking.

It should be understood by those skilled in the art that various modifications can be made to the described embodiments without departing from the basic principles of the present invention. Furthermore, it will be apparent to those skilled in the art that various improvements and modifications can be made to the present invention without departing from the spirit and scope of the present invention.

## Claims

1. A biodegradable adhesive tape, comprising:
a biodegradable adhesive composition comprising: an acrylic adhesive and a polyurethane dispersant, the polyurethane dispersant having a dry weight of at least 8% or more relative to a wet weight of the biodegradable adhesive composition, and the polyurethane dispersant having a dry weight of not more than 40% relative to a dry weight of the acrylic adhesive; and
a biodegradable backing film;
wherein the biodegradable adhesive tape has a composting degradation rate of at least greater than or equal to 90% at 180 days, as measured according to GB/T 19277.1.

2. The biodegradable adhesive tape according to claim 1, wherein the biodegradable backing film is a multilayer backing selected from one or a combination of polylactic acid film, kraft paper and cellophane.

3. The biodegradable adhesive tape according to claim 2, wherein the biodegradable backing film is a biaxially oriented biodegradable backing film.

4. The biodegradable adhesive tape according to claim 1, wherein the acrylic adhesive comprises an aqueous random copolymer having monomer units selected from one or more of acrylate, methacrylate, acrylic acid, methacrylic acid, acrylamide and methacrylamide.

5. The biodegradable adhesive tape according to claim 1, wherein the polyurethane dispersant is an aqueous dispersant.

6. The biodegradable adhesive tape according to claim 5, wherein the polyurethane dispersant is an anionically modified polyurethane dispersant.

7. The biodegradable adhesive tape according to claim 1, further comprising a tackifier.

8. The biodegradable adhesive tape according to claim 7, wherein the tackifier is selected from one or more of a rosin resin, a hydrogenated rosin resin, and a terpene phenolic resin.

9. The biodegradable adhesive tape according to claim 1, wherein the biodegradable adhesive tape has a static shear adhesion of at least more than 24 hours as measured according to GBT4851-2014 A.

10. The biodegradable adhesive tape according to claim 1, wherein the biodegradable adhesive tape has a 180° peel adhesion of at least 2.5 N/cm or more as measured according to GBT 2792-2014.

11. The biodegradable adhesive tape according to claim 1, wherein the biodegradable adhesive tape has an initial tack of at least greater than or equal to ball No. 12 as measured according to GB/T 4582-2002.

12. The biodegradable adhesive tape according to claim 1, wherein the biodegradable adhesive composition after drying has a thickness between 10 µm and 200 µm.

13. The biodegradable adhesive tape according to claim 1, further comprising a release layer.

14. A biodegradable adhesive composition, comprising:
an acrylic adhesive; and
a polyurethane dispersant, the polyurethane dispersant having a dry weight of at least 8% or more relative to a wet weight of the biodegradable adhesive composition, and the polyurethane dispersant having a dry weight of not more than 40% relative to a dry weight of the acrylic adhesive, wherein the biodegradable adhesive composition has a composting degradation rate of at least greater than or equal to 90% at 180 days, as measured according to GB/T 19277.1.

15. The biodegradable adhesive composition according to claim 14, wherein the acrylic adhesive comprises an aqueous random copolymer having monomer units selected from one or more of acrylate, methacrylate, acrylic acid, methacrylic acid, acrylamide and methacrylamide.

16. The biodegradable adhesive composition according to claim 14, wherein the polyurethane dispersant is an aqueous dispersant.

17. The biodegradable adhesive composition according to claim 16, wherein the polyurethane dispersant is an anionically modified polyurethane dispersant.

18. The biodegradable adhesive composition according to claim 14, comprising a tackifier.

19. The biodegradable adhesive composition according to claim 18, wherein the tackifier is selected from one or more of a rosin resin, a hydrogenated rosin resin, and a terpene phenolic resin.

20. A method for manufacturing a biodegradable adhesive tape, comprising:
providing a biodegradable backing film and a biodegradable adhesive composition;
coating the biodegradable adhesive composition on the biodegradable backing film, wherein the biodegradable adhesive composition comprises an acrylic adhesive and a polyurethane dispersant, the polyurethane dispersant having a dry weight of at least 8% or more relative to a wet weight of the biodegradable adhesive composition, and the polyurethane dispersant having a dry weight of not more than 40% relative to a dry weight of the acrylic adhesive; and
drying and dehydrating the biodegradable backing film coated with the biodegradable adhesive composition, to obtain a biodegradable adhesive tape,
wherein the biodegradable adhesive tape has a composting degradation rate of at least greater than or equal to 90% at 180 days, as measured according to GB/T 19277.1.
